# EUROPEAN PATENT SPECIFICATION

(11) **EP 3 630 386 B1**
(45) Date of publication and mention of the grant of the patent: **17.04.2024**
(21) Application number: 18808774.6
(22) Date of filing: 25.05.2018
(51) Int. Cl.: B21D 53/36, A47B 96/06, B21D 5/06, B21D 11/10, F16B 12/24, F16B 12/26, F16B 12/36, F16B 12/38, B21D 35/00, B21D 19/08, B21D 28/26

(54) **METHOD FOR FORMING A FEMALE ATTACHMENT PORTION AND A PART HAVING A FEMALE ATTACHMENT PORTION**
VERFAHREN ZUR HERSTELLUNG EINES WEIBLICHEN BEFESTIGUNGSTEILS UND TEIL MIT EINEM WEIBLICHEN BEFESTIGUNGSTEIL
PROCÉDÉ DE FORMATION D'UNE PARTIE DE FIXATION FEMELLE ET PIÈCE PRÉSENTANT UNE PARTIE DE FIXATION FEMELLE

(30) Priority: 01.06.2017 SE 1750695
(43) Date of publication of application: 08.04.2020
(73) Proprietor: IKEA Supply AG, 4133 Pratteln (CH)
(72) Inventor: ALMBLAD, Lars, 343 36 Älmhult (SE)
(74) Representative: Ström & Gulliksson AB
(86) International application number: PCT/SE2018/050529
(87) International publication number: WO 2018/222109

(56) References cited:
- WO-A1-00/26545
- WO-A1-2016/133455
- GB-A- 2 548 326
- US-A- 4 470 716
- US-A1- 2014 205 373
- US-A1- 2015 060 621

## Description

### Field of invention

The invention relates to a method for forming, in a metal sheet, a female attachment portion having an internal ridge. The invention also relates to a part, preferably a furniture part, having a female attachment portion, the female attachment portion being formed in a metal sheet being formed into an internal ridge of the female attachment portion.

### Technical Background

US2014/0205373 A1 discloses a joint for the assembly of furniture parts to each other. One of the furniture parts is provided with a male part adapted to be inserted into a female part. Both the male part and the female part is provided with a plurality of grooves and ridges. In US2014/0205373 A1 it is disclosed that the furniture parts as well as the male and female parts may be made of many different materials, such as wood, fibre or chip boards, plastic and metal. It is disclosed that the female and male parts may e.g. be formed by milling. Further prior art is disclosed in US4470716A.

### Summary of invention

It is an object of the invention to provide, in a metal sheet, a female attachment portion having an internal ridge.

This object has been achieved by a method for forming, in a metal sheet, a female attachment portion having an internal ridge, the method comprising:
cutting through the metal sheet thereby forming a recess, the recess having a longitudinal extension along a longitudinal geometric axis from an entrance portion to an inner end portion and having a transverse extension along a transverse geometrical axis, wherein the longitudinal and transverse axes extend along a major plane of the metal sheet and orthogonal to each other, wherein the metal sheet has free edge portions at the entrance portion of the recess, the free edges each having an extension along the transverse axis and each facing away from the inner end portion,
folding a recess surrounding portion of the metal sheet from a first major surface of the metal sheet in a direction transverse to the major plane of the metal sheet through an original extension of a second major surface, opposing the first major surface, thereby forming a folded recess surrounding portion, wherein the recess surrounding portion at least partly includes the free edges and at least partly extends around and defines the recess, wherein at least an outer portion of the folded recess surrounding portion extends in a first inclined direction from a portion surrounding the recess surrounding portion, the first inclined direction having a component in the transverse direction from the major plane and a component along the major plane inwards into the recess,
further folding an inner perimeter portion of the folded recess surrounding portion, the inner perimeter portion at least partly defining the recess, in a direction along the major plane of the metal sheet and away from the recess thereby forming a folded inner perimeter portion, wherein the folded inner perimeter portion extends in a second inclined direction from the outer portion of the folded recess surrounding portion, the second inclined direction having a component in the transverse direction from the major plane and a component along the major plane away from the recess,
whereby the thus folded recess surrounding portion, including the outer portion extending in the first inclined direction and the inner perimeter portion extending in the second inclined direction, forms said internal ridge of the female attachment portion.

The above method provides convenient manner of providing a female attachment portion with an internal ridge also for applications where it is desired to use sheet metal. It may e.g. be useful to provide an attachment system for metal shelves formed of sheet metal with the edges of the shelves folded to provide the desired load-bearing capacity to the metal shelves. The female attachment parts may also be used in providing separate female attachment parts adapted to be embedded in fibre boards. The female attachment portion is adapted to receive a male attachment part or portion e.g. formed as a dowel or pin having an envelope surface provided with one or more ridges.

It may be noted that the longitudinal extension and transverse extension are foremost used as labels. The recess need not be longer along the longitudinal direction than it is in the transverse direction. However, in the preferred embodiment the recess has after the cutting a greater extension along the longitudinal direction than its extension along the transverse direction. This is useful since the width or extension in the transverse direction will increase when the recess surrounding portion is folded and further folded.

It may be noted that the major plane does not necessarily mean that the metal sheet has an overall extension along the major plane. The major plane refers to the extension of the metal sheet in the area immediately surrounding the recess. The recess surrounding portion may be considered as a strip of material extending from the free edge at one side of the recess around the recess to the free edge at the other side of the recess. This strip may be considered as divided along its length into two sub-portions extending side by side. The inner perimeter portion is the portion extending along the edge of the recess. The outer portion is the portion extending between the inner perimeter portion and the portions of the metal sheet not affected by the folding operations. The portions not affected by the folding operations are also denoted the portions surrounding the recess surrounding portion.

By first folding the recess surrounding portion it is possible to get access to the first major surface side of the inner perimeter portion and then further folding the inner perimeter portion such that the inner perimeter portion may be flared outwardly such that the junction between the outer portion and the inner perimeter portion forms the tip of the ridge extending along the perimeter of the recess.

The cutting operations may be performed using any conventional cutting tool. It is e.g. conceivable to use nibblers, punching tools, laser or water cutters. The folding operations may be performed using any conventional folding tool. It is e.g. conceivable to use a vise and a hammer, a sheet metal bending machine using two surfaces which may be angled or inclined relative to each other, or pressing tools and dies, which may also be referred to as a punch and die.

It may be noted that the recess surrounding portion may be cut into separate portions distributed along the perimeter of the recess. With such a design each of the separate portions may be folded in a pure folding operation. However, if the recess surrounding portion forms a continuous strip around the perimeter of the recess, or separate strip portions around curved portions or corner portions of the recess, the folding will entail a folding and a local stretching of the metal sheet. In the preferred embodiments, the recess surrounding portion comprises portions around curved or corner portions of the recess thereby causing also a local stretching of the metal sheet since the resulting ridge will be stronger compared to a purely folded ridge of the same dimensions and material. In the most preferred embodiment, the recess surrounding portion forms a single continuous piece of material extending from the free edge at one side of the recess, around the recess, and to the free edge at the other side of the recess. The method above will produce a single continuous ridge along the perimeter of the recess.

The recess may, as seen along a normal to the major plane, have two opposing side edges each extending from respective associated free edge towards the inner end portion, and a curved inner edge at the inner end portion, with a concave side of the curved inner edge facing the entrance portion. This design may be considered to be a U-shape as seen perpendicular to the major plane of the metal sheet. This shape of the recess is beneficial since it may be used to provide a U-shaped female attachment portion useful in receiving male attachment parts having circular cross-section. It is also beneficial since the geometry may be used to produce a strong ridge. Moreover; the relatively smooth continuous change of curvature allows for a smooth change of the degree of local stretch of the metal giving a controllable behaviour in the folding operation.

The entrance portion of the recess may connect the recess to a closed insertion opening formed in the metal sheet. This may be used to provide strength to the female attachment portion reducing the risk of the female attachment portion flaring or becoming skewed both during manufacture and during use.

The insertion opening may have a transverse extension being greater than that of the entrance portion whereby the free edge portions are formed on each transverse side of the recess. This is a convenient manner of providing the free edges and also securing that the insertion opening has a sufficient width to be used as an insertion opening for male attachment portion adapted to be received in the female attachment portion.

The metal sheet may be folded about a fold line such that a farther portion of the metal sheet including an end portion of the insertion opening opposing the recess is folded in the direction transverse to the major plane, wherein the fold line extends along the transverse direction in the major plane and across the insertion opening, and wherein the insertion opening, before folding about the fold line, extends a distance from the fold line in a direction away from the fold line as seen along the longitudinal direction thereby forming a passage to the ridge through the folded farther portion allowing a male attachment portion to be inserted into the female attachment portion in a motion along the longitudinal direction. The farther portion may be used to strengthen the metal sheet or the piece of material it is attached to. If the metal sheet is attached to a furniture part, the farther portion may act as a load transfer surface abutting the underside of the furniture part reducing the risk that attachment between the metal sheet and the furniture part fails.

The free edges of the entrance portion of the recess may form an outside edge of the metal sheet. This will e.g. be useful if the metal sheet is to be used as flat surface without any further folding beneath the recess. It may e.g. be useful when the metal sheet is used as a separate entity attached to the side surface of a furniture part allowing for a compact design. It may be noted that the free edges need not coincide with a major edge of the metal sheet. The free edges may e.g. be offset inwardly (or even outwardly) relative to the major edge of the metal sheet.

The recess surrounding portion of the metal sheet may be folded by moving a first pressing tool from a first major surface through a planar extension of the metal sheet thereby forcing the recess surrounding portion of the metal sheet in a direction normal to the major plane of the metal sheet against a first die applied to a second major surface of the metal sheet, the second major surface facing opposite to the first major surface, wherein the first pressing tool and the first die have working surfaces inclined in the first inclined direction. This is a convenient manner of providing the desired fold. It is e.g. easy to automatize. This manner of providing the folding operation is also capable of locally stretching the material.

The inner perimeter portion may be folded by moving a second pressing tool in a direction normal to the major plane and towards the second major surface of the metal sheet into contact with the first major surface at the inner perimeter portion thereby forcing the outer portion of the folded recess surrounding portion against a second die applied in a direction normal to the major plane and towards the first major surface of the metal sheet, wherein the second pressing tool has a working surface inclined in the second inclined direction. This is a convenient manner of providing the desired fold. It is e.g. easy to automatize. This manner of providing the folding operation is also capable of locally stretching the material. The second die guides the outer portion such that it will receive its final or maintain its already provided final inclination.

The folding of the inner perimeter portion of the folded recess surrounding portion may further comprise applying a third die to an outside of the folded recess surrounding portion, wherein the second pressing tool forces the second major surface at the inner perimeter portion against the third die, the third die having a working surface inclined in the second inclined direction. This further die may be useful to further support the inner perimeter portion such that it will in a controlled manner achieve the desired final inclination. It may be noted that the third die may also be provided with a working surface abutting the second major surface at the outer portion. This way the outer portion is further stabilised.

The outer portion of the folded recess surrounding portion being inclined in the first inclined direction may form an angle of 30-60° between the first major surface at the outer portion and the major plane of the metal sheet. With this interval of the angle it is possible to provide a strong ridge which does not easily deform and which provides a secure interaction with the male attachment portion.

The folded inner perimeter portion being inclined in the second inclined direction may form an angle of 30-60° between the second major surface at the inner perimeter portion and the major plane of the metal sheet. With this interval of the angle it is possible to provide a strong ridge which does not easily deform and which provides a secure interaction with the male attachment portion.

The folded inner perimeter portion being inclined in the second inclined direction may form an angle of 60-120° to the folded outer portion being inclined in the first inclined direction. With this interval of the angle it is possible to provide a strong ridge which does not easily deform and which provides a secure interaction with the male attachment portion.

The method may comprise forming the female attachment portion in a metal sheet and attaching the metal sheet comprising the female attachment portion to a part, preferably a furniture part. This way the female attachment part may e.g. be used to secure parts formed of other materials, such as other grades of metals, wood or fibre boards.

The method may comprise forming at least two female attachment portions in a single metal sheet and attaching the metal sheet comprising said at least two female attachment portions to a part, preferably a furniture part. By providing two or more female attachment portions in a single metal sheet it is possible to achieve tight tolerances in respect of their mutual positioning. This may be used to provide a side rim of metal supporting a shelf made of wood or fibre board or of glass. The shelf may e.g. be provided with one such side rim of metal on either side or the shelf, thereby accomplishing e.g. two plus two female attachment portions. It may also be used to provide a part with well-defined mutual positioning of the female attachment portions and a separate stiffening member formed of wood or fibre board providing stiffness to the metal sheet which typically is weak against forces having a component along the normal to the major plane of the metal sheet.

The method may comprise forming a part of a metal sheet, preferably a furniture part of metal sheet, and forming at least two female attachment portions in the metal sheet forming the part, the female attachment portions preferably being located in two oppositely facing surfaces of the part. This may e.g. be used to form metal shelves. In such a case the metal shelf is preferably provided with two or more female attachment portions on both of the oppositely facing side surfaces of the metal shelf.

The above object has also been achieved by a part, preferably a furniture part, having a female attachment portion, the female attachment portion being formed in a metal sheet being formed into an internal ridge of the female attachment portion, the internal ridge being formed from a recess surrounding portion of the metal sheet being formed into:
a first portion, formed from an outer portion of the recess surrounding portion, the first portion at least partly extending around and defining the female attachment portion,
wherein the first portion extends from a portion surrounding the first portion in a first inclined direction from a first major surface of the metal sheet in a direction transverse to a major plane of the metal sheet through an original extension of a second major surface, opposing the first major surface, the first inclined direction having a component in the transverse direction from the major plane and a component along the major plane inwards into the interior space of the female attachment portion,
a second portion formed from an inner perimeter portion of the recess surrounding portion, the second portion at least partly extending around and defining the female attachment portion,
wherein the second portion extends from an inner ridge forming portion of the outer portion in a second inclined direction, the second inclined direction having a component in the transverse direction from the major plane and a component (along the major plane away from the recess.

### Brief description of the drawings

The invention will by way of example be described in more detail with reference to the appended schematic drawings, which shows a presently preferred embodiment of the invention.
Figures 1A and 1B disclose a cutting of a recess in a metal sheet.
Figures 2A and 2B disclose folding of a recess surrounding portion of the metal sheet.
Figures 3A, 3B, 3C and 3D disclose a further folding of an inner perimeter portion of the folded recess surrounding portion.
Figures 4A, 4B, 4C and 4D disclose an internal ridge in a female attachment portion.
Figure 5 discloses a shelf provided with separate female attachment portions and indicates the interaction with the male attachment parts.
Figure 6 discloses a shelf provided with integrally formed female attachment portions and indicates the interaction with the male attachment parts.
Figure 7 is a schematic diagram disclosing a method for forming in a metal sheet a female attachment portion having an internal ridge.
Figures 8A and 8B disclose alternative designs of the recess.

### Detailed description of preferred embodiments

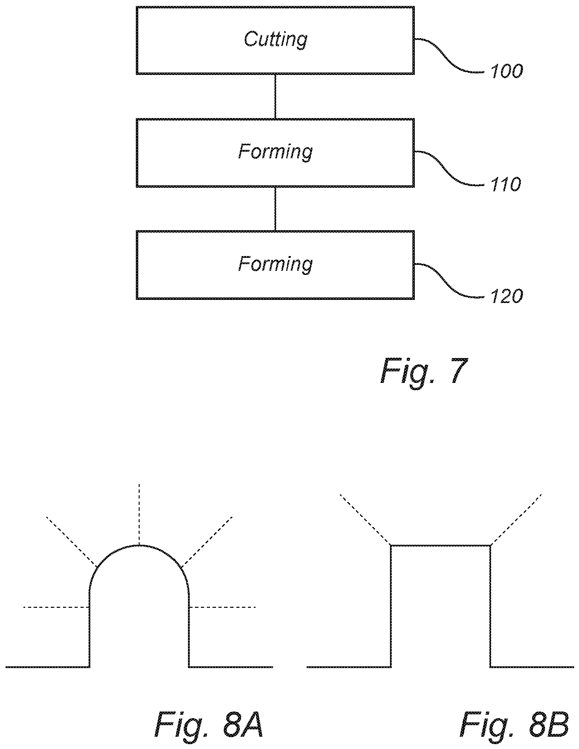

As disclosed in figure 7, the method for forming, in a metal sheet, a female attachment portion having an internal ridge, comprises in short a cutting step 100, a first forming step 110 and a second forming step 120.

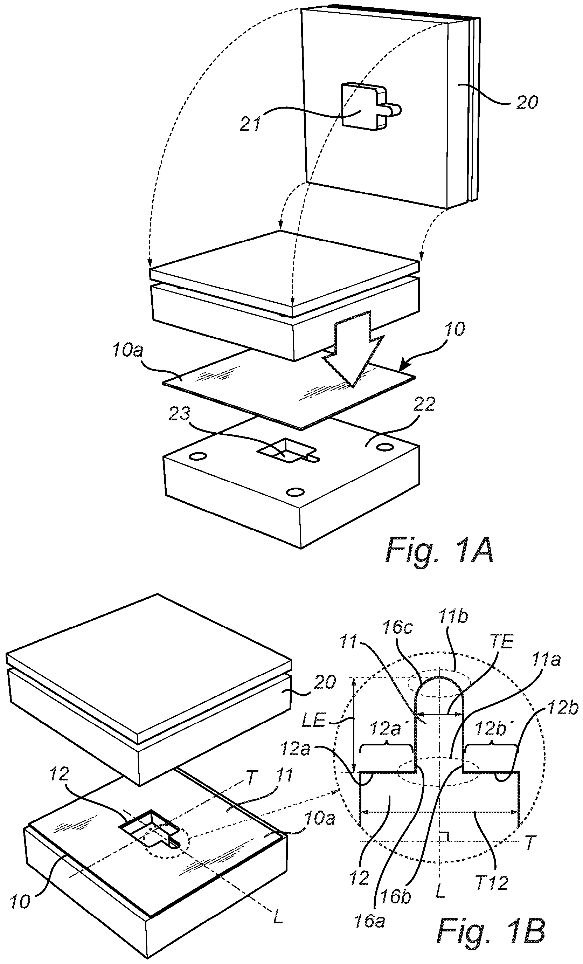

The cutting step 100 may be disclosed in detail with reference to figures 1A and 1B. The cutting step 100 may be accomplished using a punching tool 20 having protrusion 21 and a die 22 having a depression or hole 23. When the punching tool 20 and the die 22 are brought together with a metal sheet 10 between them as shown in figure 1A the protrusion 21 will force a portion of the metal sheet 10 into the depression or hole 23 thereby separating this portion from the remainder of the metal sheet 10 which gives the metal sheet as shown in figure 1B. The protrusion 21 and the depression or hole 23 have both a shape corresponding to the recess 11 they are intended to produce together. In this step any conventional cutting operation may be used. In the process shown in figures 1A and 1B, the recess 11 is cut together with an insertion opening 12 in a single cutting operation. It is also conceivable that this is performed in a two-step cutting operation.

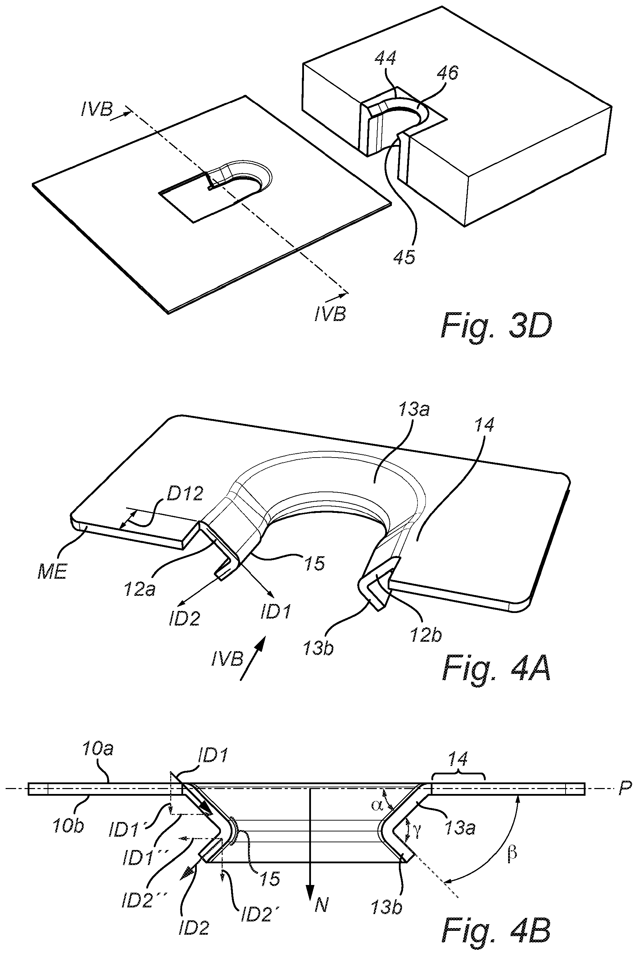

As shown in the enlargement of figure 1B the cutting through the metal sheet 10 forms a recess 11. The recess 11 has a longitudinal extension LE along a longitudinal geometric axis L from an entrance portion 11a to an inner end portion 11b. The recess 11 has a transverse extension TE along a transverse geometrical axis T. The longitudinal and transverse axes L, T extend along a major plane P (see figure 4B) of the metal sheet 10 and are orthogonal to each other. As shown in the enlargement of figure 1B, metal sheet 10 has free edge portions 12a-b at the entrance portion 11a of the recess 11. The free edges 12a, 12b each has an extension 12a', 12b' along the transverse axis T and each faces away from the inner end portion 11b.

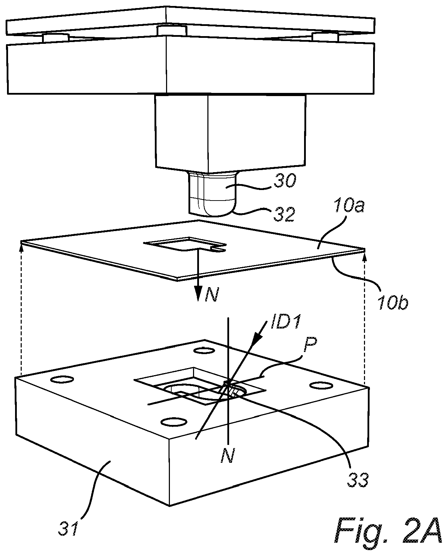

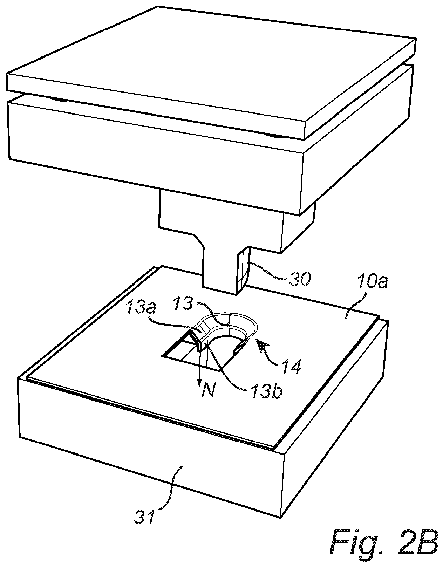

The first forming step 110 may be disclosed in detail with reference to figures 2A and 2B.

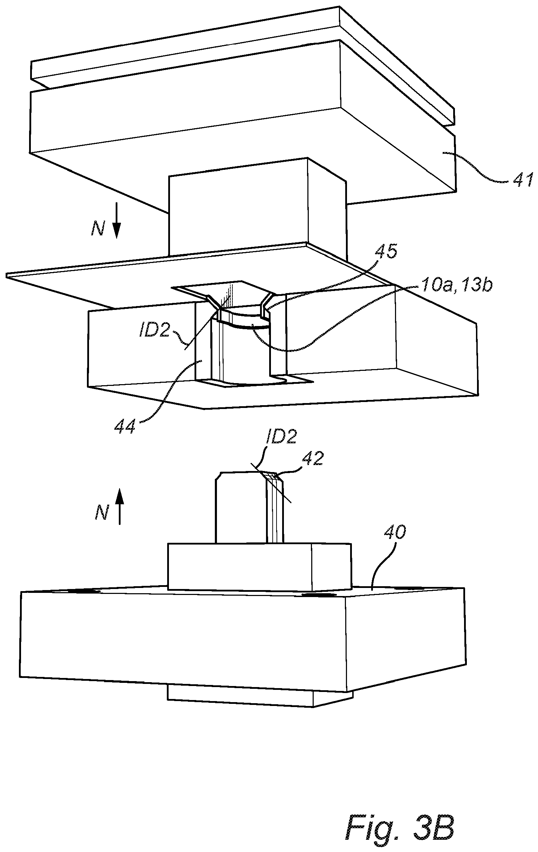

The recess surrounding portion 13 of the metal sheet 10 is folded by moving a first pressing tool 30 from a first major surface 10a through a planar extension of the metal sheet 10 thereby forcing the recess surrounding portion 13 of the metal sheet in a direction normal N (see figures 2A and 4B) to the major plane P of the metal sheet 10. The metal sheet 10 is forced against a first die 31 applied to a second major surface 10b of the metal sheet 10, the second major surface 10b facing opposite to the first major surface 10a. The first pressing tool 30 and the first die 31 have working surfaces 32, 33 inclined in the first inclined direction ID1. By clamping the metal sheet 10 between the first pressing tool 30 and the first die 31 the recess surrounding portion 13 of the metal sheet 10 is folded from a first major surface 10a of the metal sheet 10 in a direction N transverse to the major plane P of the metal sheet 10 through an original extension of a second major surface 10b, opposing the first major surface 10a, thereby forming a folded recess surrounding portion (as shown in figure 2B). In the embodiment shown in figure 3b, the recess surrounding portion 13 includes the free edges 12a-b and extends around and defines the recess 11. As shown in figure 2B an outer portion 13a of the folded recess surrounding portion 13 extends in a first inclined direction ID1 from a portion 14 surrounding the recess surrounding portion 13. The first inclined direction ID1 has, as shown in more detail in figure 4B, a component ID1' in the direction N transverse to the major plane P and a component ID1" along the major plane P inwards into the recess 11. An inner perimeter portion 13b of the folded recess surrounding portion 13 extends in the direction N transverse to the major plane P (see figure 2B).

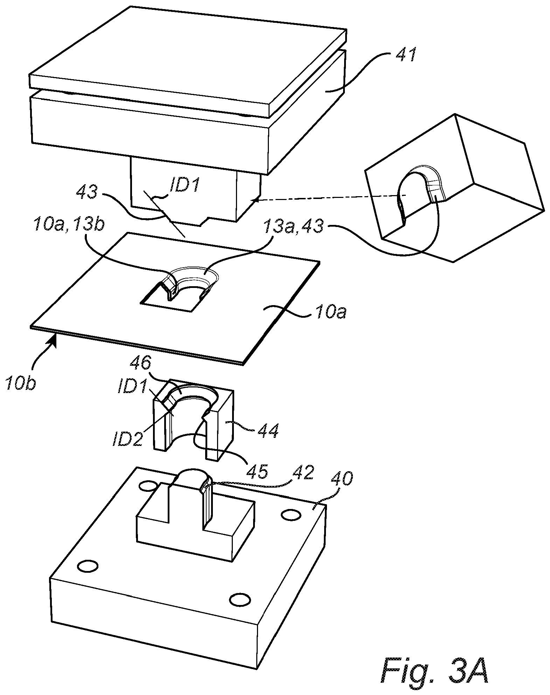

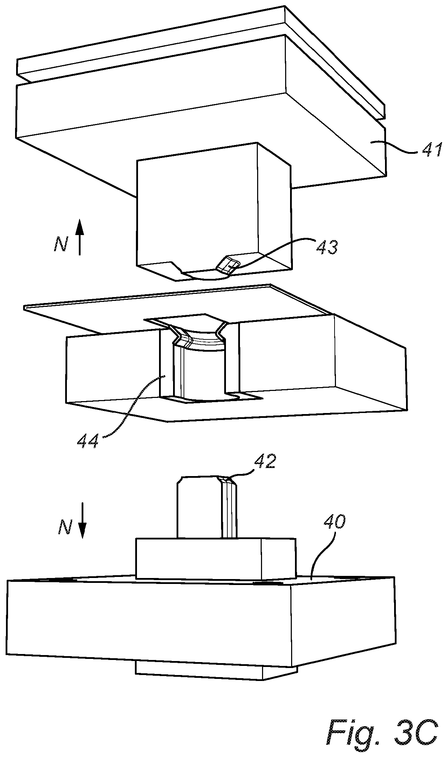

The second forming step 120 may be disclosed in detail with reference to figures 3A, 3B, 3C and 3D.

The inner perimeter portion 13b is folded by moving a second pressing tool 40 in a direction N normal to the major plane P and towards the second major surface 10b of the metal sheet 10 into contact with the first major surface 10a at the inner perimeter portion 13b (see figure 3B). This will force the outer portion 13a of the folded recess surrounding portion 13 against a second die 41 applied in a direction normal N to the major plane P and towards the first major surface 10a of the metal sheet 10.

As shown in figure 3B, the second pressing tool 40 has a working surface 42 inclined in the second inclined direction ID2. The second die 41 has a working surface 43 inclined in the first inclined direction ID1.

As shown in figure 3A-D, the folding of the inner perimeter portion 13b of the folded recess surrounding portion 13 may further comprise applying a third die 44 to an outside of the folded recess surrounding portion 13. The second pressing tool 40 forces the second major surface 10b at the inner perimeter portion 13b against the third die 44. The third die 44 has a working surface 45 inclined in the second inclined direction ID2. The third die 44 may also be provided with a working surface 46 abutting the second major surface 10b at the outer portion 13a. The working surface 46 is inclined in the first inclined direction ID1.

As shown in figures 3A-D and 4A-B, an inner perimeter portion 13b of the folded recess surrounding portion 13 is further folded in a direction along the major plane P of the metal sheet 10 and away from the recess 11 forming a folded inner perimeter portion 13b (see figure 3D). In the embodiment shown the inner perimeter portion 13b defines the recess 11. As shown in figure 4A the folded inner perimeter portion 13b extends in a second inclined direction ID2 from the outer portion 13a of the folded recess surrounding portion 13. The second inclined direction ID2 has a component ID2' in the direction N transverse to the major plane P and a component ID2" along the major plane P away from the recess 11.

As shown best in figures 4A and 4B the thus folded recess surrounding portion 13, including the outer portion 13a extends in the first inclined direction ID1 and the inner perimeter portion 13b extends in the second inclined direction ID2, forms said internal ridge 15 of the female attachment portion.

It may be noted that the recess surrounding portion 13 forms a continuous strip around the perimeter of the recess 11. Thereby the folding will entail a folding and a local stretching of the metal sheet 10. In the most preferred embodiment shown in figures from figure 1A to figure 6, the recess surrounding portion 13 forms a single continuous piece of material extending from the free edge 12a at one side of the recess 11, around the recess 11, and to the free edge 12b at the other side of the recess 11. The method above will thereby produce a single continuous ridge 15 along the perimeter of the recess 11.

The recess 11 has as shown in the enlargement of figure 1B, as seen along a normal N to the major plane P, two opposing side edges 16a, 16b each extending from respective associated free edge 12a, 12b towards the inner end portion 11b, and a curved inner edge 16c at the inner end portion 11b, with a concave side of the curved inner edge 16c facing the entrance portion 11a. This design may be considered to be a U-shape as seen perpendicular to the major plane P of the metal sheet 10.

As shown in the figures from figure 1A to figure 3D, the entrance portion 11a of the recess 11 may connect the recess 11 to a closed insertion opening 12 formed in the metal sheet 10. As shown in the enlargement of figure 1B, the insertion opening 12 may have a transverse extension T12 being greater than that of the entrance portion 11a whereby the free edge portions 12a, 12b are formed on each transverse side of the recess 11.

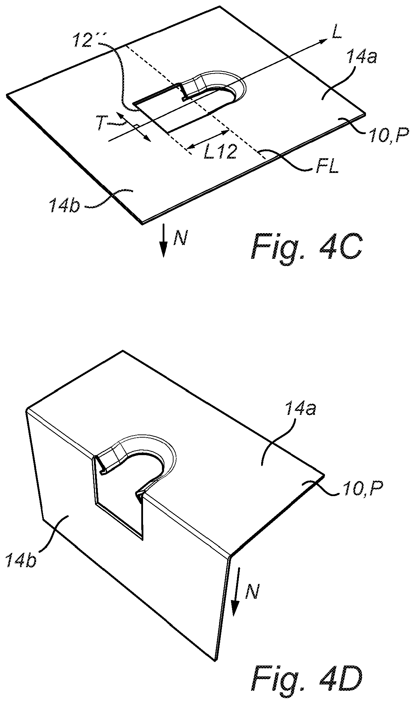

As indicated in figure 4C, the metal sheet 10 may be folded about a fold line FL such that a farther portion 14b of the metal sheet 10 including an end portion of the insertion opening 12 opposing the recess 11 is folded in the direction N transverse to the major plane P, wherein the fold line FL extends along the transverse direction T in the major plane P and across the insertion opening 12, and wherein the insertion opening 12, before folding about the fold line FL, extends a distance L12 from the fold line FL in a direction away from the fold line FL as seen along the longitudinal direction L thereby forming a passage to the ridge 15 through the folded farther portion 14b allowing a male attachment portion 90 to be inserted into the female attachment portion 91a, 91, 92 in a motion along the longitudinal direction L.

Alternatively, the free edges 12a, 12b of the entrance portion 11a of the recess 11 may form an outside edge of the metal sheet 10 as shown in figure 4A. It may be noted that the free edges 12a, 12b need not coincide with a major edge ME of the metal sheet 10. The free edges 12a, 12b may e.g. be offset inwardly (or even outwardly) a distance D12 relative to the major edge ME of the metal sheet 10 as indicated in figure 4A.

The geometry of the folded portions is conveniently described with reference to a planar view as shown in figure 4B. The geometry shown in figure 4B is applicable both for the design shown in figure 3D and figure 4A. The orientation of the view is indicated by the arrows IVB both in figure 3D and in figure 4A.

The folded outer portion 13a of the folded recess surrounding portion 13 is inclined in the first inclined direction ID2 forming an angle α of 30-60° between the first major surface 10a at the outer portion 13a and the major plane P of the metal sheet 10.

The folded inner perimeter portion 13b is inclined in the second inclined direction ID2 forming an angle β of 30-60° between the second major surface 10b at the inner perimeter portion 13b and the major plane P of the metal sheet 10.

The folded inner perimeter portion 13b is inclined in the second inclined direction ID2 forming an angle γ of 60-120° to the folded outer portion 13a being inclined in the first inclined direction ID1.

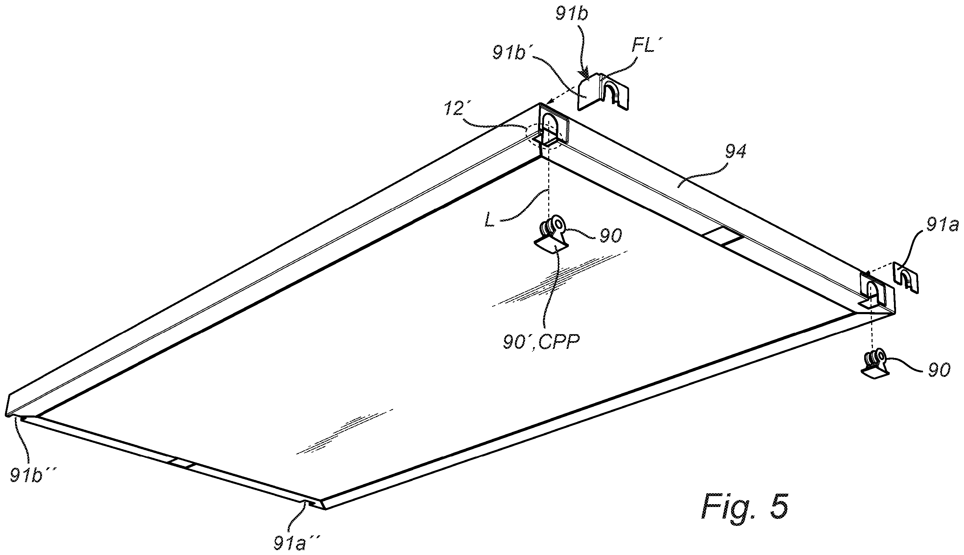

The female attachment portion or portions 91a, 91b formed in a metal sheet 10 may be attached to a part 94, preferably a furniture part 94, as shown in figure 5. In figure 5, it shown a part 94 shaped as a shelf 94 with the female attachment portions 91a, 91b shaped basically according to the design of figure 4A. It may be noted that the female attachment portions 91a, 91b could alternatively be of the kind with an insertion opening 12 and a farther portion 14b being folded about the fold line FL as shown in figure 4D. It may also be noted that the female attachment portion 91b is provided with a side flange 91b' folded about a fold line FL' extending in parallel with the longitudinal direction L along which the male attachment part 90 is intended to be inserted into the female attachment portion 91b.

From figure 5, it may also be noted that the male attachment part 90 is provided with a cover plate 90'. The cover plate 90' has a generally planar extension in a cover plate plane CPP in which the longitudinal insertion direction L forms normal as indicated in figure 5. The extension of the cover plate 90' in the cover plate plane CPP is such that the cover plate 90' covers the portion of the insertion opening 12 being folded about the fold line FL or covers an insertion opening 12' formed in the part 94 onto which the female attachment portion 91a, 91b is attached. In figure 5, the part 94 is provided with two female attachment portions 91a, 91b on the side facing the viewer in figure 5 and two corresponding attachment portions 91a", 91 b" on the other side of the part 94.

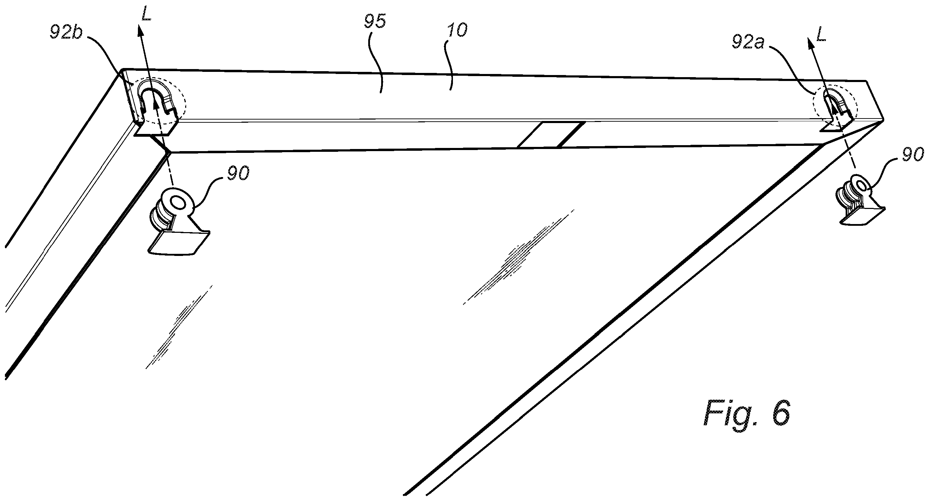

In figure 6 there is shown a part 95, preferably a furniture part 95, having two female attachment portions 92a, 92b formed in a single metal sheet 10. In figure 6, the part 95 is exemplified by a metal shelf 95. The shelf 95 shown in figure 6 has also to corresponding, integrally formed female attachment portions (not shown) at the other side of the shelf 95 in a manner corresponding to the design shown in figure 5. In the design of figure 6, the shelf 95 is provided with two integrally formed female attachment portions 92a, 92b at one of the sides as shown and two integrally formed female portions on the other side. The design with two female attachment portions 92a, 92 formed in a single piece of metal 10 may alternatively be used by attaching the metal sheet 10 comprising said at least two female attachment portions 92a, 92b to a part, preferably a furniture part. Such attachment of a metal sheet 10 with two female attachment portions 92a, 92b is preferably performed on two opposing sides of the part basically resulting in a design corresponding to the one in figure 5 with two plus two female attachment portions.

It is contemplated that there are numerous modifications of the embodiments described herein, which are still within the scope of the invention as defined by the appended claims.

The cutting operations may be e.g. performed using any conventional cutting tool. It is e.g. conceivable to use nibblers, punching tools, laser or water cutters. The folding operations may e.g. be performed using any conventional folding tool. It is e.g. conceivable to use a vise and a hammer, a sheet metal bending machine using two surfaces which may be angled towards each other, or pressing tools and dies.

It may be noted that the recess surrounding portion may be cut into separate portions distributed along the perimeter of the recess. With such a design each of the separate portions may be folded in a pure folding operation. In figure 8A there is shown a design where the recess surrounding portion is divided into six separate portions along perimeter of the recess. In figure 8B there is shown a different design, basically a rectangular shape, of the recess. This rectangular shape may be combined with the cuts indicated dividing the recess surrounding portion into separate portions (three shown in figure 8B. The rectangular shape in figure 8B may also be used when the recess surrounding portion extends as a continuous piece of material along the perimeter. This latter would basically be that the recess is cut as a rectangular shape in the process of figures 1A and 1B and then the folding and further folding is performed on this rectangular recess as is shown in the figures from figure 2A to figure 4D.

In the preferred embodiments, the recess surrounding portion comprises at least portions around curved or corner portions of the recess thereby causing also a local stretching of the metal sheet since the resulting ridge will be stronger compared to a purely folded ridge of the same dimensions and material.

## Claims

1. Method for forming, in a metal sheet (10), a female attachment portion (91a, 91b, 92a, 92b) having an internal ridge (15), the method comprising:
cutting through the metal sheet (10) thereby forming a recess (11), the recess (11) having a longitudinal extension (LE) along a longitudinal geometric axis (L) from an entrance portion (11a) to an inner end portion (11b) and having a transverse extension (TE) along a transverse geometrical axis (T), wherein the longitudinal and transverse axes (L, T) extend along a major plane (P) of the metal sheet (10) and orthogonal to each other, wherein the metal sheet (10) has free edge portions (12a, 12b) at the entrance portion (11a) of the recess (11), the free edges (12a, 12b) each having an extension (12a', 12b') along the transverse axis (T) and each facing away from the inner end portion (11b),
folding a recess surrounding portion (13) of the metal sheet (10) from a first major surface (10a) of the metal sheet (10) in a direction (N) transverse to the major plane (P) of the metal sheet (10) through an original extension of a second major surface (10b) , opposing the first major surface (10a), thereby forming a folded recess surrounding portion (13), wherein the recess surrounding portion (13) at least partly includes the free edges (12a, 12b) and at least partly extends around and defines the recess (11), wherein at least an outer portion (13a) of the folded recess surrounding portion (13) extends in a first inclined direction (ID1) from a portion (14) surrounding the recess surrounding portion (13), the first inclined direction (ID1) having a component (ID1') in the transverse direction (N) from the major plane (P) and a component (ID1") along the major plane (P) inwards into the recess (11),
**characterized by**
further folding an inner perimeter portion (13b) of the folded recess surrounding portion (13), the inner perimeter portion (13b) at least partly defining the recess (11), in a direction (T, L) along the major plane (P) of the metal sheet (10) and away from the recess (11) thereby forming a folded inner perimeter portion (13b), wherein the folded inner perimeter portion (13b) extends in a second inclined direction (ID2) from the outer portion (13a) of the folded recess surrounding portion (13), the second inclined direction (ID2) having a component (ID2') in the transverse direction (N) from the major plane (P) and a component (ID2") along the major plane (P) away from the recess (11),
whereby the thus folded recess surrounding portion (13), including the outer portion (13a) extending in the first inclined direction (ID1) and the inner perimeter portion (13b) extending in the second inclined direction (ID2), forms said internal ridge (15) of the female attachment portion (91a, 91b, 92a, 92b).

2. Method according to claim 1, wherein the recess (11) has, as seen along a normal (N) to the major plane (P), two opposing side edges (16a, 16b) each extending from respective associated free edge (12a, 12b) towards the inner end portion (11b), and a curved inner edge (16c) at the inner end portion (11b), with a concave side of the curved inner edge (16c) facing the entrance portion (11a).

3. Method according to claim 1 or 2, wherein the entrance portion (11a) of the recess (11) connects the recess (11) to a closed insertion opening (12) formed in the metal sheet (10).

4. Method according to claim 3, wherein the insertion opening (12) has a transverse extension (T12) being greater than that (TE) of the entrance portion (11a) whereby the free edge portions (12a, 12b) are formed on each transverse side of the recess (11).

5. Method according to claim 3 or 4, wherein the metal sheet (10) is folded about a fold line (FL) such that a farther portion (14b) of the metal sheet (10) including an end portion (12") of the insertion opening (12) opposing the recess (11) is folded in the direction (N) transverse to the major plane (P), wherein the fold line (FL) extends along the transverse direction (T) in the major plane (P) and across the insertion opening (12), and wherein the insertion opening (12), before folding about the fold line (FL), extends a distance (L12) from the fold line (FL) in a direction away from the fold line (FL) as seen along the longitudinal direction (L) thereby forming a passage to the ridge (15) through the folded farther portion (14b) allowing a male attachment portion (90) to be inserted into the female attachment portion (91a, 91b, 92a, 92b) in a motion along the longitudinal direction (L).

6. Method according to claim 1 or 2, wherein the free edges (12a, 12b) of the entrance portion (11a) of the recess (11) form an outside edge of the metal sheet (10).

7. Method according to any one of claims 1-6, wherein the recess surrounding portion (13) of the metal sheet (10) is folded by moving a first pressing tool (30) from the first major surface (10a) through a planar extension (P) of the metal sheet (10) thereby forcing the recess surrounding portion (13) of the metal sheet (10) in a direction (N) normal to the major plane (P) of the metal sheet (10) against a first die (31) applied to the second major surface (10b) of the metal sheet (10), wherein the first pressing tool (30) and the first die (31) have working surfaces (32, 33) inclined in the first inclined direction (ID1).

8. Method according to any one of claims 1-7, wherein the inner perimeter portion (13b) is folded by moving a second pressing tool (40) in a direction normal (N) to the major plane (P) and towards the second major surface (10b) of the metal sheet (10) into contact with the first major surface (10a) at the inner perimeter portion (13b) thereby forcing the outer portion (13a) of the folded recess surrounding portion (13) against a second die (41) applied in a direction (N) normal to the major plane (P) and towards the first major surface (10a) of the metal sheet (10), wherein the second pressing tool (40) has a working surface inclined in the second inclined direction (ID2).

9. Method according to claim 8, wherein the folding of the inner perimeter portion (13b) of the folded recess surrounding portion (13) further comprises applying a third die (44) to an outside of the folded recess surrounding portion (13), wherein the second pressing tool (40) forces the second major surface (10b) at the inner perimeter portion (13b) against the third die (44), the third die (44) having a working surface (45) inclined in the second inclined direction (ID2).

10. Method according to any one of claims 1-9, wherein the outer portion (13) of the folded recess surrounding portion (13) being inclined in the first inclined direction (ID1) forms an angle (α) of 30-60° between the first major surface (10a) at the outer portion (13) and the major plane (P) of the metal sheet (10).

11. Method according to any one of claims 1-10, wherein the folded inner perimeter portion (13b) being inclined in the second inclined direction (ID2) forms an angle (β) of 30-60° between the second major surface (10b) at the inner perimeter portion (13b) and the major plane (P) of the metal sheet (10).

12. Method according to any one of claims 1-11, the method comprising forming the female attachment portion (91a, 91b) in a metal sheet (10) and attaching the metal sheet (10) comprising the female attachment portion (91a, 91b) to a part (94), preferably a furniture part (94).

13. Method according to any one of claim 1-11, wherein the method comprises forming at least two female attachment portions (92a, 92b) in a single metal sheet (10) and attaching the metal sheet (10) comprising said at least two female attachment portions (92a, 92b) to a part (95), preferably a furniture part (95).

14. Method according to any one of claims 1-11, wherein the method comprises forming a part (95) of a metal sheet (10), preferably a furniture part (95) of metal sheet (10), and forming at least two female attachment portions (92a, 92b) in the metal sheet (10) forming the part (95), the female attachment portions (92a, 92b) preferably being located in two oppositely facing surfaces of the part (95).

15. A part having a female attachment portion (91a, 91b, 92a, 92b), the female attachment portion (91a, 91b, 92a, 92b) being formed in a metal sheet (10) being formed into an internal ridge (15) of the female attachment portion (91a, 91b, 92a, 92b), the internal ridge (15) being formed from a recess surrounding portion (13) of the metal sheet (10) being formed into
a first portion (13a), formed from an outer portion (13a) of the recess surrounding portion (13), the first portion (13a) at least partly extending around and defining the female attachment portion (91a, 91b, 92a, 92b),
wherein the first portion (13a) extends from a portion (14) surrounding the first portion (13a) in a first inclined direction (ID1) from a first major surface (10a) of the metal sheet (10) in a direction (N) transverse to a major plane (P) of the metal sheet (10) through an original extension of a second major surface (10b), opposing the first major surface (10a), the first inclined direction (ID1) having a component (ID1') in the transverse direction (N) from the major plane (P) and a component (ID1") along the major plane (P) inwards into the interior space of the female attachment portion (91a, 91b, 92a, 92b), **characterized in that**
a second portion (13b) is formed from an inner perimeter portion (13b) of the recess surrounding portion (13), the second portion (13b) at least partly extending around and defining the female attachment portion (91a, 91b, 92a, 92b), and **in that**
the second portion (13b) extends from an inner ridge forming portion (15) of the outer portion (13a) in a second inclined direction (ID2), the second inclined direction (ID2) having a component (ID2') in the transverse direction (N) from the major plane (P) and a component (ID2") along the major plane (P) away from the recess (11).

## Patentansprüche

1. Verfahren zur Ausbildung eines weiblichen Befestigungsabschnitts (91a, 91b, 92a, 92b) mit einem inneren Steg (15), in einem Blech (10), wobei das Verfahren umfasst:
Schneiden durch das Blech (10), wodurch eine Ausnehmung (11) gebildet wird, wobei die Ausnehmung (11) eine Längserstreckung (LE) entlang einer geometrischen Längsachse (L) von einem Eingangsabschnitt (11a) zu einem inneren Endabschnitt (11b) und mit einer Quererstreckung (TE) entlang einer geometrischen Querachse (T) aufweist, wobei sich die Längs- und Querachsen (L, T) entlang einer Hauptebene (P) des Blechs (10) und orthogonal zueinander erstrecken, wobei das Blech (10) freie Kantenabschnitte (12a, 12b) an dem Eingangsabschnitt (11a) der Ausnehmung (11) aufweist, wobei die freien Kanten (12a, 12b) jeweils eine Erstreckung (12a', 12b') entlang der Querachse (T) aufweisen und jeweils von dem inneren Endabschnitt (11b) abgewandt sind,
Falten eines eine Ausnehmung umgebenden Abschnitts (13) des Blechs (10) von einer ersten Hauptoberfläche (10a) des Blechs (10) in einer Richtung (N) quer zur Hauptebene (P) des Blechs (10) durch eine ursprüngliche Erstreckung einer zweiten Hauptoberfläche (10b), die der ersten Hauptfläche (10a) gegenüberliegt, wodurch ein gefalteter, eine Ausnehmung umgebender Abschnitt (13) ausgebildet wird, wobei der eine Ausnehmung umgebende Abschnitt (13) zumindest teilweise die freien Kanten (12a, 12b) einschließt und sich zumindest teilweise um die Ausnehmung (11) herum erstreckt und diese definiert, wobei zumindest ein äußerer Abschnitt (13a) des gefalteten, die Ausnehmung umgebenden Abschnitts (13) sich in einer ersten geneigten Richtung (ID1) von einem Abschnitt (14), der den die Ausnehmung umgebenden Abschnitt (13) umgibt, erstreckt, wobei die erste geneigte Richtung (ID1) eine Komponente (ID1 ') in der Querrichtung (N) von der Hauptebene (P) und eine Komponente (ID1") entlang der Hauptebene (P) nach innen in die Ausnehmung (11) aufweist,
**gekennzeichnet durch**
weiteres Falten eines inneren Umfangsabschnitts (13b) des gefalteten, eine Ausnehmung umgebenden Abschnitts (13), wobei der innere Umfangsabschnitt (13b) zumindest teilweise die Ausnehmung (11) definiert, in einer Richtung (T, L) entlang der Hauptebene (P) des Blechs (10) und von der Ausnehmung (11) weg, wodurch ein gefalteter innerer Umfangsabschnitt (13b) gebildet wird, wobei sich der gefaltete innere Umfangsabschnitt (13b) in einer zweiten geneigten Richtung (ID2) von dem äußeren Abschnitt (13a) des gefalteten, eine Ausnehmung umgebenden Abschnitts (13) erstreckt, wobei die zweite geneigte Richtung (ID2) eine Komponente (ID2') in der Querrichtung (N) von der Hauptebene (P) und eine Komponente (ID2") entlang der Hauptebene (P) weg von der Ausnehmung (11) aufweist,
wodurch der so gefaltete, die Ausnehmung umgebende Abschnitt (13), einschließlich des äußeren Abschnitts (13a), der sich in der ersten geneigten Richtung (ID1) erstreckt, und des inneren Umfangsabschnitts (13b), der sich in der zweiten geneigten Richtung (ID2) erstreckt, den inneren Steg (15) des weiblichen Befestigungsabschnitts (91a, 91b, 92a, 92b) bildet.

2. Verfahren nach Anspruch 1, **dadurch gekennzeichnet, dass** die Ausnehmung (11) entlang einer Normalen (N) zur Hauptebene (P) zwei gegenüberliegende Seitenkanten (16a, 16b), die sich jeweils von der zugehörigen freien Kante (12a, 12b) in Richtung des inneren Endabschnitts (11 b) erstrecken, und eine gekrümmte innere Kante (16c) am inneren Endabschnitt (11 b) aufweist, wobei eine konkave Seite der gekrümmten inneren Kante (16c) dem Eingangsbereich (11a) zugewandt ist.

3. Verfahren nach Anspruch 1 oder 2, wobei der Eingangsbereich (11a) der Ausnehmung (11) die Ausnehmung (11) mit einer geschlossenen Einführöffnung (12) verbindet, die in dem Blech (10) ausgebildet ist.

4. Verfahren nach Anspruch 3, wobei die Einführöffnung (12) eine Quererstreckung (T12) aufweist, die größer ist als die (TE) des Eingangsbereichs (11a) ist, wodurch die freien Kantenabschnitte (12a, 12b) auf jeder Querseite der Ausnehmung (11a) gebildet werden.

5. Verfahren nach Anspruch 3 oder 4, wobei das Blech (10) um eine Faltlinie (FL) gefaltet wird, so dass ein entfernterer Abschnitt (14b) des Blechs (10), der einen Endabschnitt (12") der Einführöffnung (12) gegenüber der Ausnehmung (11 ) enthält, in der Richtung (N) quer zur Hauptebene (P) gefaltet wird, wobei sich die Faltlinie (FL) entlang der Querrichtung (T) in der Hauptebene (P) und über die Einführöffnung (12) erstreckt, und wobei die Einführungsöffnung (12), vor dem Falten um die Faltlinie (FL), sich über eine Distanz (L12) von der Faltlinie (FL) in einer Richtung weg von der Faltlinie (FL) entlang der Längsrichtung (L) erstreckt, wodurch ein Durchgang zum Steg (15) durch den gefalteten entfernteren Abschnitt (14b) gebildet wird, wodurch ein männlicher Befestigungsabschnitt (90) in den weiblichen Befestigungsabschnitt (91a, 91b, 92a, 92b) in einer Bewegung entlang der Längsrichtung (L) eingeführt werden kann.

6. Verfahren nach Anspruch 1 oder 2, wobei die freien Kanten (12a, 12b) des Eingangsbereichs (11a) der Ausnehmung (11) eine Außenkante des Blechs (10) bilden.

7. Verfahren nach einem der Ansprüche 1 bis 6, wobei der die Ausnehmung (13) umgebende Abschnitt (13) des Blechs (10) gefaltet wird, indem ein erstes Presswerkzeug (30) von der ersten Hauptoberfläche (10a) durch eine ebene Erstreckung (P) des Blechs (10) bewegt wird, wodurch der die Ausnehmung umgebende Abschnitt (13) des Blechs (10) in eine Richtung (N) senkrecht zur Hauptebene (P) des Blechs (10) gegen einen ersten Stempel (31) gezwungen wird, der an der zweiten Hauptoberfläche (10b) des Blechs (10) angelegt wird, wobei das erste Presswerkzeug (30) und der erste Stempel (31) Arbeitsflächen (32, 33) aufweisen, die in der ersten geneigten Richtung (ID1) geneigt sind.

8. Verfahren nach einem der Ansprüche 1-7, wobei der innere Umfangsabschnitt (13b) gefaltet wird, indem ein zweites Presswerkzeug (40) in einer Richtung senkrecht (N) zu der Hauptebene (P) und in Richtung der zweiten Hauptoberfläche (10b) des Blechs (10) in Kontakt mit der ersten Hauptoberfläche (10a) an dem inneren Umfangsabschnitt (13b) bewegt wird, wodurch der äußere Abschnitt (13a) des gefalteten, eine Ausnehmung umgebenden Abschnitts (13) gegen einen zweiten Stempel (41) gezwungen wird, der in einer Richtung (N) senkrecht zu der Hauptebene (P) und in Richtung der ersten Hauptoberfläche (10a) des Blechs (10) angelegt wird, wobei das zweite Presswerkzeug (40) eine Arbeitsfläche aufweist, die in der zweiten geneigten Richtung (ID2) geneigt ist.

9. Verfahren nach Anspruch 8, wobei das Falten des inneren Umfangsabschnitts (13b) des gefalteten, die Ausnehmung umgebenden Abschnitts (13) ferner ein Anwenden eines dritten Stempels (44) auf eine Außenseite des gefalteten , eine Ausnehmung umgebenden Abschnitts (13) umfasst, wobei das zweite Presswerkzeug (40) die zweite Hauptoberfläche (10b) an dem inneren Umfangsabschnitt (13b) gegen den dritten Stempel (44) drückt, wobei der dritte Stempel (44) eine Arbeitsfläche (45) aufweist, die in der zweiten geneigten Richtung (ID2) geneigt ist.

10. Verfahren nach einem der Ansprüche 1 bis 9, wobei der äußere Abschnitt (13) des gefalteten eine Ausnehmung umgebenden Abschnitts (13), der in der ersten geneigten Richtung (ID1) geneigt ist, einen Winkel (α) von 30-60° zwischen der ersten Hauptoberfläche (10a) an dem äußeren Abschnitt (13) und der Hauptebene (P) des Blechs (10) bildet.

11. Verfahren nach einem der Ansprüche 1-10, wobei der gefaltete innere Umfangsabschnitt (13b), der in der zweiten geneigten Richtung (ID2) geneigt ist, einen Winkel (β) von 30-60° zwischen der zweiten Hauptoberfläche (10b) an dem inneren Umfangsabschnitt (13b) und der Hauptebene (P) des Blechs (10) bildet.

12. Verfahren nach einem der Ansprüche 1-11, wobei das Verfahren ein Ausbilden des weiblichen Befestigungsabschnitts (91a, 91b) in einem Blech (10) und ein Befestigen des Blechs (10) mit dem weiblichen Befestigungsabschnitt (91a, 91b) an einem Teil (94), vorzugsweise einem Möbelteil (94), umfasst.

13. Verfahren nach einem der Ansprüche 1-11, wobei das Verfahren ein Ausbilden von mindestens zwei weiblichen Befestigungsabschnitten (92a, 92b) in einem einzigen Blech (10) und ein Befestigen des Blechs (10) mit den mindestens zwei weiblichen Befestigungsabschnitten (92a, 92b) an einem Teil (95), vorzugsweise einem Möbelteil (95), umfasst.

14. Verfahren nach einem der Ansprüche 1-11, wobei das Verfahren ein Ausbilden eines Teils (95) eines Blechs (10), vorzugsweise eines Möbelteils (95) aus Blech (10), und ein Ausbilden von mindestens zwei weiblichen Befestigungsabschnitten (92a, 92b) in dem Blech (10), das das Teil (95) bildet, umfasst, wobei sich die weiblichen Befestigungsabschnitte (92a, 92b) vorzugsweise in zwei einander gegenüberliegenden Flächen des Teils (95) befinden.

15. Teil mit einem weiblichen Befestigungsabschnitt (91a, 91b, 92a, 92b), wobei der weiblichen Befestigungsabschnitt (91a, 91b, 92a, 92b), der in einem Blech (10) ausgebildet ist, in einem inneren Steg (15) des weiblichen Befestigungsabschnitts (91a, 91b, 92a, 92b) ausgebildet ist, wobei der innere Steg (15) aus einem eine Ausnehmung umgebenden Abschnitt (13) des Blechs (10) ausgebildet ist, der ausgebildet ist in
einen ersten Abschnitt (13a), der aus einem äußeren Abschnitt (13a) des die Ausnehmung umgebenden Abschnitts (13) gebildet ist, wobei sich der erste Abschnitt (13a) zumindest teilweise um den weiblichen Befestigungsabschnitt (91a, 91b, 92a, 92b) herum erstreckt und diesen definiert,
wobei sich der erste Abschnitt (13a) von einem den ersten Abschnitt (13a) umgebenden Abschnitt (14) in einer ersten geneigten Richtung (ID1) von einer ersten Hauptoberfläche (10a) des Blechs (10) in einer Richtung (N) quer zu einer Hauptebene (P) des Blechs (10) durch eine ursprüngliche Erstreckung einer zweiten Hauptoberfläche (10b), die der ersten Hauptoberfläche (10a) gegenüberliegt, erstreckt, wobei die erste geneigte Richtung (ID1) eine Komponente (ID1') in der Querrichtung (N) von der Hauptebene (P) und eine Komponente (ID1 ") entlang der Hauptebene (P) nach innen in den Innenraum des weiblichen Befestigungsabschnitts (91a, 91b, 92a, 92b) umfasst, **dadurch gekennzeichnet, dass**
ein zweiter Abschnitt (13b) aus einem inneren Umfangsabschnitt (13b) des die Ausnehmung umgebenden Abschnitts (13) gebildet ist, wobei sich der zweite Abschnitt (13b) zumindest teilweise um den weiblichen Befestigungsabschnitt (91a, 91b, 92a, 92b) erstreckt und diesen definiert, und dass sich der zweite Abschnitt (13b) von einem einen inneren Steg bildenden Abschnitt (15) des äußeren Abschnitts (13a) in einer zweiten geneigten Richtung (ID2) erstreckt, wobei die zweite geneigte Richtung (ID2) eine Komponente (ID2') in der Querrichtung (N) von der Hauptebene (P) und eine Komponente (ID2") entlang der Hauptebene (P) von der Ausnehmung (11) weg aufweist.

## Revendications

1. Procédé pour former, dans une tôle (10), une partie de fixation femelle (91a, 91b, 92a, 92b) ayant une arête interne (15), le procédé comprenant:
le découpage de la tôle (10), formant ainsi un évidement (11), l'évidement (11) ayant une extension longitudinale (LE) le long d'un axe géométrique longitudinal (L) depuis une partie d'entrée (11a) jusqu'à une partie d'extrémité interne (11b) et ayant une extension transversale (TE) le long d'un axe géométrique transversal (T), où les axes longitudinal et transversal (L, T) s'étendent le long d'un plan principal (P) de la tôle (10) et sont orthogonaux l'un à l'autre, où la tôle (10) a des parties de bord libres (12a, 12b) au niveau de la partie d'entrée (11a) de l'évidement (11), les bords libre (12a, 12b) ayant chacun une extension (12a', 12b') le long de l'axe transversal (T) et chacun étant tourné à l'opposé de la partie d'extrémité interne (11b),
le pliage d'une partie entourant l'évidement (13) de la tôle (10) à partir d'une première surface principale (10a) de la tôle (10) dans une direction (N) transversale au plan principal (P) de la tôle (10) sur une extension originale d'une seconde surface principale (10b), opposée à la première surface principale (10a), formant ainsi une partie entourant l'évidement (13) pliée, où la partie entourant l'évidement (13) inclut au moins en partie les bords libres (12a, 12b) et s'étend au moins en partie autour de et définit l'évidement (11), où au moins une partie externe (13a) de la partie entourant l'évidement (13) pliée s'étend dans une première direction inclinée (ID1) à partir d'une partie (14) entourant la partie entourant l'évidement (13), la première direction inclinée (ID1) ayant une composante (ID1') dans la direction transversale (N) à partir du plan principal (P) et une composante (ID1") le long du plan principal (P) vers l'intérieur dans l'évidement (11),
**caractérisé par**
le pliage supplémentaire d'une partie périmétrique interne (13b) de la partie entourant l'évidement (13) pliée, la partie périmétrique interne (13b) définissant au moins en partie l'évidement (11), dans une direction (T, L) le long du plan principal (P) de la tôle (10) et opposée à l'évidement (11), formant ainsi une partie périmétrique interne (13b) pliée, où la partie périmétrique interne (13b) pliée s'étend dans une seconde direction inclinée (ID2) à partir de la partie externe (13a) de la partie entourant l'évidement (13) pliée, la seconde direction inclinée (ID2) ayant une composante (ID2') dans la direction transversale (N) à partir du plan principal (P) et une composante (ID2") le long du plan principal (P) opposée à l'évidement (11),
de sorte que la partie entourant l'évidement (13) ainsi pliée, incluant la partie externe (13a) s'étendant dans la première direction inclinée (ID1) et la partie périmétrique interne (13b) s'étendant dans la seconde direction inclinée (ID2), forme ladite arête interne (15) de la partie de fixation femelle (91a, 91b, 92a, 92b).

2. Procédé selon la revendication 1, où l'évidement (11) a, comme vu le long d'une normale (N) au plan principal (P), deux bords latéraux (16a, 16b) opposés s'étendant chacun à partir du bord libre (12a, 12b) associé respectif vers la partie d'extrémité interne (11b), et un bord interne incurvé (16c) au niveau de la partie d'extrémité interne (11b), un côté concave du bord interne incurvé (16c) faisant face à la partie d'entrée (11a).

3. Procédé selon la revendication 1 ou 2, où la partie d'entrée (11a) de l'évidement (11) relie l'évidement (11) à une ouverture d'insertion fermée (12) formée dans la tôle (10).

4. Procédé selon la revendication 3, où l'ouverture d'insertion (12) a une extension transversale (T12) qui est supérieure à celle (TE) de la partie d'entrée (11a) de sorte que les parties de bord libre (12a, 12b) sont formées sur chaque côté transversal de l'évidement (11).

5. Procédé selon la revendication 3 ou 4, où la tôle (10) est pliée autour d'une ligne de pliage (FL) de sorte qu'une partie plus éloignée (14b) de la tôle (10) incluant une partie d'extrémité (12") de l'ouverture d'insertion (12) opposée à l'évidement (11) est pliée dans la direction (N) transversale au plan principal (P), où la ligne de pliage (FL) s'étend le long de la direction transversale (T) dans le plan principal (P) et à travers l'ouverture d'insertion (12), et où l'ouverture d'insertion (12), avant le pliage autour de la ligne de pliage (FL), s'étend sur une distance (L12) à partir de la ligne de pliage (FL) dans une direction opposée à la ligne de pliage (FL) comme vu le long de la direction longitudinale (L), formant ainsi un passage vers la crête (15) à travers la partie plus éloignée (14b) pliée permettant à une partie de fixation mâle (90) d'être insérée dans la partie de fixation femelle (91a, 91b, 92a, 92b) dans un mouvement le long de la direction longitudinale (L).

6. Procédé selon la revendication 1 ou 2, où les bords libres (12a, 12b) de la partie d'entrée (11a) de l'évidement (11) forment un bord extérieur de la tôle (10).

7. Procédé selon l'une quelconque des revendications 1 à 6, où la partie entourant l'évidement (13) de la tôle (10) est pliée en déplaçant un premier outil de presse (30) depuis la première surface principale (10a) sur une extension plane (P) de la tôle (10), forçant ainsi la partie entourant l'évidement (13) de la tôle (10) dans une direction (N) normale au plan principal (P) de la tôle (10) contre une première matrice (31) appliquée sur la seconde surface principale (10b) de la tôle (10), où le premier outil de presse (30) et la première matrice (31) ont des surfaces de travail (32, 33) inclinées dans la première direction inclinée (ID1).

8. Procédé selon l'une quelconque des revendications 1 à 7, où la partie périmétrique interne (13b) est pliée en amenant un second outil de presse (40) dans une direction normale (N) au plan principal (P) et vers la seconde surface principale (10b) de la tôle (10) en contact avec la première surface principale (10a) au niveau de la partie périmétrique interne (13b), forçant ainsi la partie externe (13a) de la partie entourant l'évidement (13) pliée contre une seconde matrice (41) appliquée dans une direction (N) normale au plan principal (P) et vers la première surface principale (10a) de la tôle (10), où le second outil de presse (40) a une surface de travail inclinée dans la seconde direction inclinée (ID2).

9. Procédé selon la revendication 8, où le pliage de la partie périmétrique interne (13b) de la partie entourant l'évidement (13) pliée comprend en outre l'application d'une troisième matrice (44) à un côté extérieur de la partie entourant l'évidement (13) pliée, où le second outil de presse (40) force la seconde surface principale (10b) au niveau de la partie périmétrique interne (13b) contre la troisième matrice (44), la troisième matrice (44) ayant une surface de travail (45) inclinée dans la seconde direction inclinée (ID2).

10. Procédé selon l'une quelconque des revendications 1 à 9, où la partie externe (13) de la partie entourant l'évidement (13) pliée inclinée dans la première direction inclinée (ID1) forme un angle (α) de 30 à 60° entre la première surface principale (10a) au niveau de la partie externe (13) et le plan principal (P) de la tôle (10).

11. Procédé selon l'une quelconque des revendications 1 à 10, où la partie périmétrique interne (13b) pliée inclinée dans la seconde direction inclinée (ID2) forme un angle (β) de 30 à 60° entre la seconde surface principale (10b) au niveau de la partie périmétrique interne (13b) et le plan principal (P) de la tôle (10).

12. Procédé selon l'une quelconque des revendications 1 à 11, le procédé comprenant la formation de la partie de fixation femelle (91a, 91b) dans une tôle (10) et la fixation de la tôle (10) comprenant la partie de fixation femelle (91a, 91b) à une pièce (94), de préférence une pièce de meuble (94).

13. Procédé selon l'une quelconque des revendications 1 à 11, où le procédé comprend la formation d'au moins deux parties de fixation femelles (92a, 92b) dans une seule tôle (10) et la fixation de la tôle (10) comprenant lesdites au moins deux parties de fixation femelles (92a, 92b) à une pièce (95), de préférence une pièce de meuble (95).

14. Procédé selon l'une quelconque des revendications 1 à 11, où le procédé comprend la formation d'une pièce (95) d'une tôle (10), de préférence une pièce de meuble (95) de tôle (10), et la formation d'au moins deux parties de fixation femelles (92a, 92b) dans la tôle (10) formant la pièce (95), les parties de fixation femelles (92a, 92b) étant de préférence situées dans deux surfaces opposées de la pièce (95).

15. Pièce ayant une partie de fixation femelle (91a, 91b, 92a, 92b), la partie de fixation femelle (91a, 91b, 92a, 92b) étant formée dans une tôle (10) étant formée en une arête interne (15) de la partie de fixation femelle (91a, 91b, 92a, 92b), l'arête interne (15) étant formée à partir d'une partie entourant l'évidement (13) de la tôle (10) étant formée en
une première partie (13a), formée à partir d'une partie externe (13a) de la partie entourant l'évidement (13), la première partie (13a) s'étendant au moins en partie autour de et définissant la partie de fixation femelle (91a, 91b, 92a, 92b),
où la première partie (13a) s'étend à partir d'une partie (14) entourant la première partie (13a) dans une première direction inclinée (ID1) à partir d'une première surface principale (10a) de la tôle (10) dans une direction (N) transversale à un plan principal (P) de la tôle (10) sur une extension originale d'une seconde surface principale (10b), opposée à la première surface principale (10a), la première direction inclinée (ID1) ayant une composante (ID1') dans la direction transversale (N) à partir du plan principal (P) et une composante (ID1") le long du plan principal (P) vers l'intérieur dans l'espace intérieur de la partie de fixation femelle (91a, 91b, 92a, 92b), **caractérisée en ce que**
une seconde partie (13b) est formée à partir d'une partie périmétrique interne (13b) de la partie entourant l'évidement (13), la seconde partie (13b) s'étendant au moins en partie autour de et définissant la partie de fixation femelle (91a, 91b, 92a, 92b), et **en ce que**
la seconde partie (13b) s'étend à partir d'une partie formant arête interne (15) de la partie externe (13a) dans une seconde direction inclinée (ID2), la seconde direction inclinée (ID2) ayant une composante (ID2') dans la direction transversale (N) à partir du plan principal (P) et une composante (ID2") le long du plan principal (P) opposée à l'évidement (11).
